# DEMANDE DE BREVET EUROPEEN

(11) **EP 4 790 343 A1**
(43) Date de publication de la demande: **12.08.2026**
(21) Numéro de dépôt: 26152376.5
(22) Date de dépôt: 16.01.2026
(51) Int. Cl.: F28C 1/02, B01D 53/047, F25J 3/06, F25J 3/02

(54) **PROCÉDÉ ET APPAREIL DE MISE À L AIR D'UN GAZ**

(30) Priorité: 05.02.2025 FR 2501194
(71) Demandeur: L'Air Liquide, Société Anonyme pour l'Etude et l'Exploitation des Procédés Georges Claude, 75007 Paris (FR)
(72) Inventeur: CHAIX, Jean-Baptiste, 75007 PARIS (FR); AMY, Samuel, 75007 PARIS (FR); ANDRICH, Marine, 75007 PARIS (FR); LECLERC, Mathieu, 75007 PARIS (FR)
(74) Mandataire: Air Liquide

(57) **Abrégé**

Un appareil de séparation de CO2 et de mise à l'air d'un gaz comprend une tour (T) de mise en contact comprenant des sections inférieure (I) et supérieure (C) et dans la section inférieure des moyens de favorisation de transfert de masse (P), une unité de capture de CO2 (PSA, CB), des moyens pour envoyer un gaz à l'unité de capture, des moyens pour envoyer un gaz enrichi en azote (N) de l'unité de capture en bas de la section inférieure de la tour de refroidissement, des moyens pour envoyer de l'eau (H) au-dessus de la section inférieure et en dessous de la section supérieure de la tour et des moyens reliés à un_niveau au-dessus de la section inférieure pour y envoyer un gaz à mettre à l'air (G) qui est une partie du gaz à séparer dans l'unité de capture.

## Description

La présente invention est relative à un procédé et appareil de mise à l'air d'un gaz. Il est souvent nécessaire de mettre à l'air un gaz en le dispersant de sorte qu'il n'est pas présent au niveau du sol ou des habitations. Un tel gaz peut contenir au moins 15% mol de CO2, au moins 30% mol de CO2, au moins 60% mol de CO2, voire au moins 90% de CO2.

Le gaz à mettre à l'air peut par exemple provenir d'au moins une cimenterie et/ou d'au moins une unité de production de chaux et/ou d'au moins un four de combustion et/ou d'au moins une unité d'oxy-combustion et/ou d'au moins un vaporeformage (SMR) et/ou d'au moins un reformage autothermique (ATR) et/ou d'une unité de production de métal.

Sinon le gaz à mettre à l'air peut provenir d'une unité de capture de CO2 alimentée par un gaz provenant d'au moins une cimenterie et/ou d'au moins une unité de production de chaux et/ou d'au moins un four de combustion et/ou d'au moins une unité d'oxy-combustion et/ou d'au moins un vaporeformage (SMR) et/ou d'au moins un reformage autothermique (ATR).

L'unité de capture de CO2 peut comprendre une unité de séparation par adsorption et/ou une unité de séparation par condensation partielle et/ou distillation et/ou solidification.

Il est connu de séparer un gaz venant d'une des sources mentionnées ci-dessus dans une unité de séparation par adsorption, par exemple PSA, produisant un gaz appauvri en CO2 et un gaz enrichi en CO2, le gaz enrichi en CO2 étant ensuite envoyé être séparé dans une unité de séparation par condensation partielle et/ou distillation et/ou solidification.

Les procédés de capture de CO2 sur des fumées provenant : d'une cimenterie, d'une unité de production de chaux, d'un four de combustion, d'une unité d'oxycombustion, d'un SMR... comprennent le plus souvent une première étape de refroidissement et de lavage des fumées. Le lavage et le refroidissement sont souvent réalisés dans une tour ou plusieurs tours de lavage avec ou sans injection d'agent basique. Le gaz lavé et refroidi est alors généralement envoyé dans un filtre pour enlever les poussières avant d'être aspiré par un premier compresseur. Enfin, dans certaines configurations, un ventilateur permet de pousser ou tirer (selon la position du ventilateur proche de l'émetteur ou proche de l'unité de capture CO2) les fumées depuis le point d'émission jusqu'à l'entrée de l'unité de capture de CO2. Un exemple typique d'une unité de capture de CO2 sépare le gaz lavé, refroidi et comprimé (et éventuellement séché) comme décrit ci-dessus par condensation partielle et/ou distillation et/ou solidification.

L'unité de capture de CO2 enrichit le gaz traité en CO2 en rejetant notamment un gaz enrichi en azote contenu dans les fumées à l'atmosphère via une conduite afin d'amener les gaz dans une zone sans danger pour les opérateurs (en anglais "safe location"). Le gaz peut par exemple venir de l'unité de séparation par adsorption, étant le gaz appauvri en CO2, et/ou de l'unité de séparation par condensation partielle et/ou distillation et/ou solidification. Lorsque les fumées contiennent une quantité importante d'azote (>15% mol, préférentiellement >25% mol, préférentiellement > 50% mol), le gaz enrichi en azote peut être utilisé pour produire de l'eau froide (à une température < 25°C, préférentiellement < 15°C) grâce à une tour eau / azote, afin de valoriser cette eau dans le procédé de capture de CO2 (comme par exemple pour refroidir le gaz à l'entrée des sécheurs) ou ailleurs. Le gaz enrichi en azote est plus froid que l'eau à refroidir du fait qu'il a subi dans l'unité de capture de CO2 des transformations successives comme par exemple une compression, un refroidissement et une détente.

Un tel procédé est décrit dans EP1712858A1 et EP0503910A1.

La tour eau / azote peut être surmontée du conduit de rejet du gaz enrichi en N2 afin de gagner en :
- Empreinte au sol
- Génie civil pour maintenir le conduit de rejet du gaz enrichi en azote
- Pertes de charges
- Coût (le conduit de rejet commence au-dessus de la tour eau / azote)

En cas d'arrêt intempestif de l'unité de capture de CO2 (comme par exemple si la tour de lavage, le filtre ou le compresseur de fumées ne fonctionne plus), les fumées doivent pouvoir être rapidement mises à l'air pour minimiser l'impact sur les équipements en amont et notamment pour éviter un arrêt intempestif de l'unité émettrice de fumées du fait d'une modification brusque de la pression en aval de l'unité émettrice. De plus, il faut également pouvoir mettre à l'air les fumées lors du démarrage séquentiel des différents équipements ainsi qu'en cas d'ouverture de soupape (éléments de protection de la pression).

Les solutions pour rediriger les fumées vers un point d'émission (comme par exemple les vannes de type ventelle) ont un temps de réponse (temps de réaction du système de contrôle et temps de réaction de l'équipement) généralement trop important par rapport aux perturbations que peut admettre l'unité émettrice étant donnée la faible capacité de gaz tampon qu'assure la liaison entre l'unité émettrice et l'unité de capture (du fait des basses pressions des fumées notamment).

Dans le cas où il existe déjà une cheminée (notamment généralement en sortie de l'unité émettrice), celle-ci peut être utilisée en cas de arrêt intempestif de l'unité de capture de CO2 à condition qu'elle ne soit pas trop éloignée de l'unité de capture CO2. Si l'unité émettrice est éloignée de l'unité de capture CO2, il devient alors nécessaire d'un point de vue faisabilité technique et coût :
- De construire une cheminée de mise à l'air des fumées au niveau de l'unité de capture CO2 ou
- De construire un conduit basse pression pour acheminer les fumées de l'unité de capture jusqu'à la cheminée existante de l'unité émettrice, ce qui pose des difficultés techniques de risque de corrosion du conduit du fait du risque de condensation des gaz humides acides.

L'utilisation d'une tour eau / azote pour la production d'eau glacée est quelque chose de bien connue sur les unités de séparation des gaz de l'air. Typiquement, cette tour consiste en une enceinte métallique ou en béton dans lequel des garnissages permettent le bon contact entre l'eau et le gaz. Cette tour est parfois surmontée d'une cheminée selon les contraintes locales de dispersion du gaz relargué.

Le matériau utilisé est typiquement de l'acier carbone ou du béton, les gouttelettes contenues dans le gaz émis n'étant pas corrosives.

L'utilisation d'une tour eau / azote pour la production d'eau glacée est également quelque chose de connue sur les unités de capture de CO₂ sur fumées par condensation partielle et/ou distillation et/ou solidification afin de produire de l'eau froide pour être valorisée dans le procédé. Le gaz enrichi en azote peut provenir de la séparation à basse température par condensation partielle et/ou distillation et/ou solidification ou d'une étape de séparation par adsorption en amont de la séparation à basse température. Typiquement, dans ces procédés, le gaz enrichi en azote chargé d'eau est mis à l'air par le biais d'une cheminée dédiée ou par le biais de la cheminée de l'émetteur et le gaz enrichi en azote par le conduit en connexion avec la tour eau / azote.

L'invention propose d'utiliser une tour azote/eau pour mettre à l'air un gaz contenant du CO2 autre que l'azote envoyé en bas de la tour. Selon une variante, elle propose combiner une cheminée locale au niveau par exemple d'une unité de capture CO2 de rejet de fumées de combustion ou de gaz issu des fumées de combustion avec une tour eau / azote afin de réduire le nombre de points d'émission et de réduire le nombre total de cheminées (réduisant le coût et l'impact visuel, améliorant la compacité et la faisabilité technique).

L'invention permet de minimiser le nombre d'équipements en mettant en commun la tour eau / azote et la cheminée locale de rejet de gaz, par exemple des fumées ou des gaz issus du traitement des fumées (comme par exemple les fumées ayant subies une étape de lavage à l'eau, de lavage avec un agent basique, d'une filtration et/ou d'une compression). L'invention évite d'avoir à construire une cheminée locale dédiée au relargage des fumées ou des gaz issus du traitement des fumées et d'y associer les instruments réglementaires de contrôle des émissions. L'invention permet également d'éviter la construction d'un conduit ramenant les fumées jusqu'à une cheminée existante mais potentiellement éloignée de l'unité de capture de CO2. L'invention permet aussi de limiter les risques de perturbations sur l'unité émettrice de fumées (qui pourraient conduire à des alarmes ou un déclenchement de l'unité amont ou aussi à un fonctionnement de l'unité amont dans des conditions différentes des conditions opératoires prévues) du fait d'une perturbation de l'unité de capture CO2, en cas de modification brusque des conditions de procédé et/ou d'arrêt intempestif d'une partie de l'unité. Un tel arrêt peut se produire si des soupapes s'ouvrent ou si l'unité dépasse une valeur de température ou pression ou débit ou composition au-delà de l'acceptable d'un point de vue de sécurité ou de conception des équipements.

Un gaz résiduaire est un gaz qui, au moins ponctuellement, contient au moins un polluant, par exemple du CO ou du CO2, qui est au moins ponctuellement envoyé à l'atmosphère.

FR2976059A1 décrit un procédé selon le préambule de la revendication 1.

Selon un objet de l'invention, il est prévu un procédé de mise à l'air d'un gaz dans lequel :
i) Pendant un première mode d'opération, un débit gazeux contenant au moins 50% mol d'azote, préférentiellement au moins 70% mol d'azote est envoyé à une tour de mise en contact comprenant une section inférieure, et une section supérieure et dans la section inférieure des moyens de favorisation de transfert de masse et de chaleur à un premier niveau en bas de la section inférieure, la tour étant alimentée par un débit d'eau arrivant à un deuxième niveau de la section inférieure au-dessus du premier niveau, le débit gazeux étant plus froid ou à la même température que le débit d'eau arrivant dans la tour, de l'eau refroidie est soutirée en cuve de la tour et le débit gazeux enrichi en eau sort en haut de la tour à l'atmosphère, aucun gaz n'étant envoyé à la tour à un niveau au-dessus du premier niveau et
ii) Pendant un deuxième mode d'opération,
   a) un débit gazeux contenant au moins 50% mol d'azote est envoyé à la tour de mise en contact au premier niveau, la tour étant alimentée par un débit d'eau arrivant au deuxième niveau au-dessus du premier niveau, le débit gazeux étant plus froid ou à la même température que le débit d'eau arrivant dans la tour, de l'eau refroidie est soutirée en cuve de la tour, un gaz destiné à être mis à l'air est envoyé dans la tour à un troisième niveau au-dessus du deuxième niveau, le débit gazeux enrichi en eau mélangé au gaz, destiné à être mis à l'air vers le haut et en dehors de la tour, sort en haut de la tour
      et/ou
   b) après l'étape a) ou à la place de l'étape a), aucun débit gazeux contenant au moins 50% mol d'azote n'est envoyé à la tour de mise en contact, la tour n'est pas alimentée par un débit d'eau arrivant au deuxième niveau au-dessus du premier niveau et un gaz destiné à être mis à l'air est envoyé dans la tour à un troisième niveau au-dessus du deuxième niveau, le débit gazeux enrichi en eau mélangé au gaz, destiné à être mis à l'air vers le haut et en dehors de la tour, sort en haut de la tour.

Selon des aspects facultatifs :
- le gaz destiné à être mis à l'air contient au moins 15% mol de CO2.
- le gaz destiné à être mise à l'air est au moins une partie d'un gaz résiduaire d'une source pouvant être au moins une unité de combustion et/ou au moins une unité de oxycombustion et/ou au moins une cimenterie et/ou au moins une unité de production de chaux et/ou au moins une unité de production de métal et/ou au moins une unité de vaporeformage et/ou au moins une unité de reformage autothermique.

- le gaz résiduaire est envoyé au moins pendant le premier mode d'opération à au moins une unité de capture de dioxyde de carbone pour s'y séparer.
- le gaz résiduaire contient de l'azote et le débit gazeux envoyé à la tour provient d'au moins une ou de l'au moins une unité de capture de dioxyde de carbone, de préférence d'au moins une unité d'adsorption ou de perméation de CO2 produisant un gaz enrichi en CO2 qui est ensuite séparé dans l'unité de capture et un gaz appauvri en CO2 qui constitue le débit gazeux envoyé à la tour.
- du gaz résiduaire contenant du CO2 et de l'azote provenant d'une source pouvant être au moins une unité de combustion et/ou au moins une unité de oxycombustion et/ou au moins une cimenterie et/ou au moins une unité de production de chaux et/ou au moins une unité de production de métal et/ou au moins une unité de vaporeformage et/ou au moins une unité de reformage autothermique est envoyé au moins pendant les premier et deuxième modes d'opération à une unité de capture de dioxyde de carbone ou dans lequel du gaz résiduaire contenant du CO2 et de l'azote provenant d'une source pouvant être au moins une unité de combustion et/ou au moins une unité de oxycombustion et/ou au moins une cimenterie et/ou au moins une unité de production de chaux et/ou au moins une unité de production de métal et/ou au moins une unité de vaporeformage et/ou au moins une unité de reformage autothermique est envoyé au moins pendant les premier et deuxième modes d'opération à l'au moins une unité de capture de dioxyde de carbone et le gaz destiné à être mise à l'air provient de l'au moins une unité de capture.
- le gaz destiné à être mise à l'air est produit par le lavage du gaz résiduaire contenant du CO2 et de l'azote et/ou par la compression du gaz contenant du CO2 et de l'azote et/ou de la séparation par adsorption ou perméation du gaz résiduaire contenant du CO2 et de l'azote et/ou du séchage du gaz contenant du CO2 et de l'azote et/ou de la séparation par condensation partielle et/ou distillation et/ou solidification du gaz résiduaire contenant du CO2 et de l'azote ou d'un gaz produit par le séparation du gaz résiduaire contenant du CO2 et de l'azote.
- le deuxième mode d'opération correspond à une perturbation et/ou un arrêt intempestif et/ou un démarrage d'une unité dont provient le gaz destiné à être mis à l'air.
- dans un troisième mode d'opération suivant directement le deuxième mode d'opération, le gaz destiné à être mis à l'air n'est plus envoyé à la tour mais est envoyé à une cheminée d'évacuation, à laquelle est envoyé au moins un autre gaz provenant de la source.
- le premier mode d'opération correspond à un mode d'opération normale de l'unité de capture.
- le deuxième mode d'opération dure moins qu'une heure, voire moins que dix minutes.
- selon le deuxième mode d'opération, le gaz à mettre à l'air est envoyé à la tour pendant une durée déterminée et de préférence à la fin de la durée déterminée, le gaz à mettre à l'air est envoyé ailleurs.
- selon le deuxième mode d'opération, un premier gaz destiné être mis à l'air est envoyé à la tour et selon une troisième mode d'opération un deuxième gaz destiné à être mis à l'air est envoyé à la tour, le premier gaz et le deuxième gaz ayant des compositions en au moins un composant commun qui diffèrent d'au moins 5%mol et/ou des températures qui diffèrent d'au moins 40°C, le premier et le deuxième gaz étant chacun soit une partie du gaz résiduaire soit un gaz provenant de l'unité de capture de CO2 et le premier et le deuxième n'étant pas envoyés tous deux à la tour pendant les deuxième et troisième modes d'opération.
- le débit gazeux est à une température inférieure à 20°C.
- le débit gazeux est sec.
- le gaz à mettre à l'air est à une température supérieure à 20°C, voire supérieure à 70°C.
- le gaz à mettre à l'air est humide.
- un élément d'élimination de gouttes d'eau se trouve en dessous de la partie supérieure.
- le gaz résiduaire est séparé par condensation partielle et/ou distillation et/ou solidification sans avoir été séparé par adsorption pour enlever un composant autre que l'eau.
- le gaz résiduaire est séparé par condensation partielle et/ou distillation et/ou solidification après avoir été traité par adsorption pour enlever de l'eau qu'il contient
- le gaz résiduaire est séparé par condensation partielle et/ou distillation et/ou solidification après avoir été séparé par adsorption pour enlever un composant autre que l'eau, tel que de l'azote et/ou de l'hydrogène.

Selon un autre objet de l'invention, il est prévu un appareil de séparation de CO2 et de mise à l'air d'un gaz comprenant une tour de mise en contact comprenant une section inférieure, et une section supérieure et dans la section inférieure des moyens de favorisation de transfert de masse et de chaleur, une unité de capture de CO2, des moyens pour envoyer un gaz contenant éventuellement au moins 15% de CO2 à l'unité de capture de CO2, des moyens pour envoyer un gaz enrichi en azote de l'unité de capture de CO2 en bas de la section inférieure de la tour de refroidissement, des moyens pour envoyer de l'eau au-dessus de la section inférieure et en dessous de la section supérieure de la tour à une température plus chaude que ou égale à celle du gaz enrichi en azote entrant dans la tour et des moyens reliés à un_niveau au-dessus de la section inférieure pour y envoyer un gaz à mettre à l'air qui est une partie du gaz à séparer dans l'unité de capture de CO2 et/ou un gaz traité dans l'unité de capture de CO2.

De préférence, la section inférieure a un diamètre plus grand que celui de la section supérieure.

L'invention peut consister pour l'équipement de la tour eau / azote à combiner les fonctions suivantes :
- Mise en contact de l'eau avec un gaz contenant au moins 50% mol d'azote et éventuellement d'autres composants plus léger que le CO2, le gaz étant plus froid que l'eau, afin de produire de l'eau refroidie, par exemple à plus basse température que le réseau d'eau de refroidissement
- Mise à l'atmosphère, par exemple en zone sûre, du gaz contenant au moins 50% mol d'azote riche en azote et éventuellement d'autres composants plus léger que le CO2, le gaz étant chargé saturé en eau (gaz issu de la mise en contact liquide vapeur de l'étape précédente)
- Fonction ajoutée par la présente invention : mise à l'atmosphère, par exemple en zone sûre, d'un gaz issu des fumées d'une l'unité émettrice: i.e. mise en connexion de la ligne d'échappement
   i) des fumées de l'unité émettrice avec la mise à l'atmosphère en zone sûre des fumées ou
   ii) des fumées de l'unité émettrice ayant subies un traitement préalable (par exemple lavage à l'eau, lavage avec un agent basique, filtration physique, compression et/ou séchage).

La tour à eau / azote peut faire partie d'une unité de capture de CO2 et peut permettre de générer de l'eau glacée à partir d'un gaz appauvri en CO2 contenant au moins 50% mol d'azote produit par un PSA CO2 qui fait partie de l'unité de capture ou constitue l'unité de capture. Cet azote impur contient une fraction importante de CO2 (par exemple entre 0.1% et 2%). La dissolution de ce CO2 dans l'eau glacée impose d'avoir une tour eau / azote dans un matériau résistant à des pH inférieurs à 3.5 (ou plus largement à des pH acides, soit pH < 7). Le réseau d'eau glacée est également en des matériaux résistants à des pH inférieurs à 3.5. Hors phases de démarrage et d'arrêt intempestif, la tour eau /azote fonctionne normalement et de manière classique : le gaz enrichi en azote (avec une teneur en azote > 50% mol, préférentiellement > 70% mol) est injecté en bas de la tour par une entrée dédiée. Les garnissages de la tour permettent l'évaporation de l'eau qui ruisselle dessus pour charger en vapeur d'eau le gaz. Cette évaporation est endothermique et permet de refroidir le reste de l'eau qui ruisselle jusqu'au fond de la tour avant d'être pompée vers des utilisateurs d'eau glacée.

La partie supérieure de la tour est utilisée pour au moins un des cas suivants : démarrage ou arrêt intempestif de l'un des éléments de l'unité de traitement des fumées ou de capture CO2 présentés sur le schéma ci-dessous (lavage à l'eau, lavage basique, réchauffeur, soufflante, filtration, compression, séchage, séparation avec un procédé de type PSA).

En cas d'arrêt intempestif de l'un de ces éléments, le gaz en sortie du dernier élément n'étant pas arrêté est envoyé vers la tour eau / azote pour être mis à l'atmosphère à travers la partie supérieure de la tour eau / azote (cheminée).

En particulier, si la tour de lavage s'arrête intempestivement, du gaz chaud et sale doit être mis à l'atmosphère. Ce gaz est généralement chargé en acides (NOx & SOx par exemple) et en poussières. Une mise à l'atmosphère pour une durée trop prolongée de ce gaz sale à travers la tour risquerait de concentrer ces acides et ces poussières dans le circuit d'eau glacée. La mise à l'air des fumées à travers cette cheminée est donc limitée dans le temps. Une purge de déconcentration permet de déconcentrer la poussière et les acides qui se seraient accumulés dans le circuit d'eau glacée. Le temps typique auquel est limité le rejet dans cette cheminée est celui nécessaire à arrêter l'import de fumées vers l'unité de capture de CO2 et à rediriger ces fumées vers la cheminée existante de l'unité émettrice. La redirection des fumées vers la cheminée de l'unité émettrice est assurée par un jeu de vannes ou de vannes de type ventelles (« dampers » en anglais) entre l'unité émettrice et l'unité de capture CO2. La phase transitoire de rejet des gaz dans la tour eau / azote est de l'ordre de quelques secondes à quelques minutes, en fonction du temps de réponse d'ouverture/fermeture des ventelles, temps de réponse du système de régulation (par exemple. DCS), volume des équipements, sensibilité du procédé amont (de l'unité émettrice) en fonction d'une perturbation du procédé aval.

Plus généralement, le rejet des fumées ou des gaz issus du traitement des fumées dans la tour eau / azote a pour vocation à être transitoire pour des raisons de choix des matériaux, contraintes écologiques et gestion des impuretés et particules solides dans la tour eau / azote.

Les fumées sont chaudes et humides : la mise à l'air à travers une cheminée froide (refroidie en fonctionnement normal par l'azote sortant de la tour eau /azote) va provoquer la condensation d'acides et d'eau sur les parois. Ces gouttes acides vont ruisseler dans la partie basse de la tour eau/azote. Cela ne pose pas de problème particulier parce que la mise à l'air des fumées est limitée dans le temps et en fréquence et que le circuit d'eau glacée est dimensionné pour résister à la corrosion d'un pH proche de 3. De plus, il est attendu que la fréquence de déclenchement des éléments élévateurs de pression (soufflante, compresseur) est plus élevée que la fréquence de déclenchement des tours de lavage ce qui permet de limiter la fréquence d'envoi de fumées riches en poussières et acides forts (SO₃, H₂SO₄, HCl, HF, HBr ...) vers la cheminée de la tour eau / azote.

Les rejets d'azote et de fumées chaudes et sales ne sont jamais simultanés : le rejet de fumées chaudes et sales intervient uniquement en cas d'arrêt intempestif de la tour de lavage. Or, cet arrêt intempestif implique aussi l'arrêt de l'émission d'azote. Le rejet des gaz issus des fumées est généralement refroidi et lavé (par de l'eau et un ou plusieurs agents basiques) avant envoi dans la cheminée de la tour eau / azote car il est attendu que le compresseur a une fréquence d'arrêt intempestif plus importante que les tours de lavage. En particulier, les tours de lavage sont dimensionnées pour que leur fréquence d'arrêt intempestif soit faible (par exemple redondance des pompes de circulation).

Enfin, l'invention permet de concentrer en un seul point l'ensemble des rejets continus et/ou soumis à permis d'émission. Ainsi, l'ensemble des évents, notamment tous ceux contenants des impuretés dangereuses (par exemple NOx et SOx) soit lors du démarrage soit en fonctionnement continu de l'unité de capture CO2, sont dirigés vers cette cheminée unique. Cela permet donc d'avoir un point d'émission unique pour l'ensemble de l'unité de capture.

L'invention sera décrite de manière plus détaillée en se référant aux figures où :
[FIG.1] représente une tour de refroidissement à utiliser dans le procédé de l'invention.
[FIG.2] représente schématiquement un procédé selon l'invention.

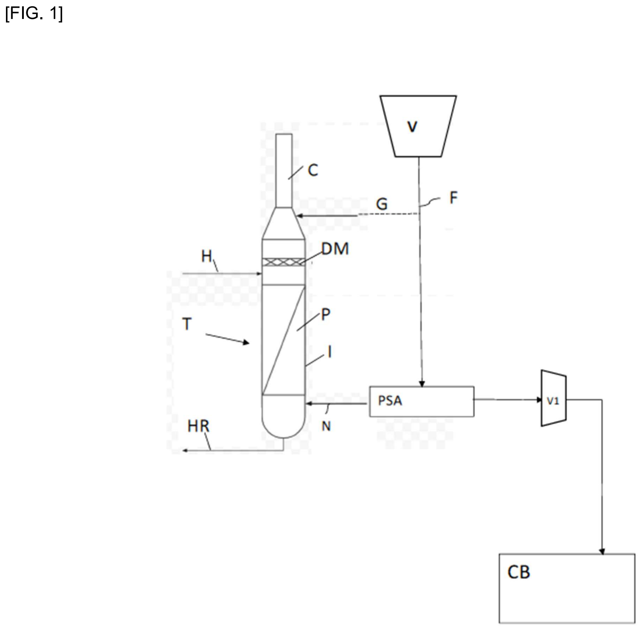

[FIG.1] montre une tour de refroidissement comprenant une partie inférieure I contenant des garnissages P pour favoriser les échanges de masse et de chaleur et une partie supérieure C, à plus petit diamètre que la partie inférieure, qui ne contient pas de garnissages. La tour T comprend en cuve une entrée de gaz N, le gaz N étant de préférence sec, a une température de moins de 20°C, contenant au moins 50% mol d'azote et ne contenant pas de particules solides, et en haut de la partie inférieure et en dessous de la partie supérieure C une entrée d'eau H. Elle comprend une sortie d'eau refroidie HR en cuve. Dans la partie inférieure de la tour, au-dessus de l'entrée d'eau H se trouve un élément d'élimination de gouttes d'eau DM, cet élément se trouvant en dessous de la partie supérieure C. Une entrée de gaz à mettre à l'air G se trouve en dessous de la partie supérieure C dans une section frustoconique reliant la partie supérieure C à la partie inférieure I. Le gaz G peut être humide et se trouver à une température supérieure à 20°C, voire supérieure de 70°C.

Ainsi le contact entre le gaz N et l'eau H permet de refroidir l'eau qui sort en cuve de la tour T. L'azote humide monte dans la partie inférieure I, est débarrassé d'une partie de l'eau dans l'élément DM et sort de la partie supérieure C mélangé avec le gaz G, quand celui-ci est présent. Quand le gaz G n'est pas présent, le gaz humide riche en azote sort également de la partie supérieure C.

La partie supérieure C, de préférence seule la partie supérieure, peut être en acier inoxydable de type acier austéno-ferritique, ou austénitique.

Les parties inférieure et supérieure I, C peuvent être en acier inoxydable ou en tout autre matériau résistant à la corrosion d'un pH proche de 3.

L'envoi du gaz G à la tour est de préférence de courte durée, selon sa composition, de préférence moins qu'une heure, voire moins que dix minutes et l'envoi est régulé par une minuterie, un système de régulation adapté et/ou un jeu de vannes ou de vannes de type ventelle.

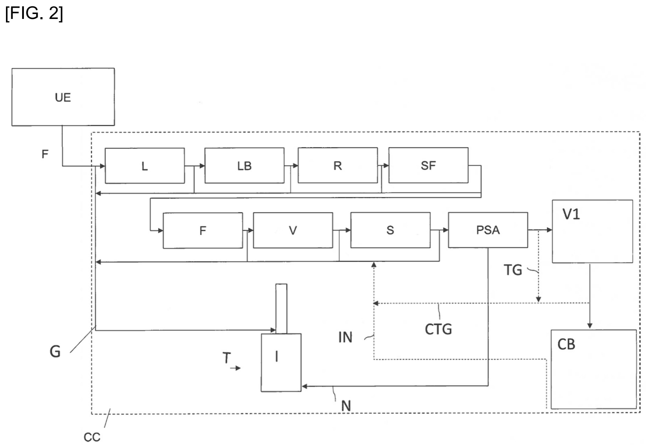

[FIG.2] représente schématiquement un procédé selon l'invention ;

Une unité émettrice UE peut être au moins une cimenterie et/ou au moins une unité de production de chaux et/ou au moins un four de combustion et/ou au moins une unité d'oxy-combustion et/ou au moins un vaporeformage (SMR) et/ou au moins un reformage autothermique (ATR).

Selon un premier mode d'opération, l'unité émettrice UE produit un gaz F, souvent appelé fumées, qui contient du CO2 et de l'azote. Le gaz F peut également contenir au moins un composant choisi dans la liste : oxygène, argon, monoxyde de carbone, hydrogène, poussières, acides forts (SO3, H2SO4, HCl, HF, HBr ...), SOx, NOx. Le gaz 5 est envoyé à une unité de capture de CO2 CC où il traité d'abord par lavage à l'eau L, éventuellement ensuite par lavage basique LB. Le gaz lavé est réchauffé par un réchauffeur R, comprimé par une soufflante SF, filtré dans une unité de filtrage pour enlever les poussières si présentes, comprimé par un compresseur V, séché par un sécheur S, séparé par adsorption dans une unité "PSA pour former un gaz TG enrichi en CO2 et appauvri en azote et un gaz N enrichi en azote et appauvri en CO2, contenant au moins 50% mol d'azote. Le gaz enrichi en CO2 est comprimé formant un gaz comprimé CTG, refroidi et puis séparé par condensation partielle et/ou distillation et/ou solidification dans une unité de séparation à basse température CB formant un gaz IN appauvri en CO2 et enrichi en oxygène et/ou azote et/ou argon et un fluide CO2 riche en CO2. Le gaz N est envoyé en cuve de la tour de refroidissement T de la [FIG. 1], la tour ayant une partie inférieure I et une partie supérieure C. La partie inférieure de la tour T est alimentée par de l'eau à refroidir à une température supérieure ou égale à celle du gaz N et de l'eau refroidie sort en bas de la tour T. La vaporisation de l'eau crée du froid en plus de l'échange thermique.

Il peut être nécessaire, selon un deuxième mode d'opération, d'envoyer à l'air :
- au moins une partie du gaz F sortant de l'unité UE et/ou
- au moins une partie du gaz F traité dans l'unité de capture de CC, par traitement par au moins un des moyens suivants : par lavage à l'eau L, par lavage basique LB, par réchauffage R, par compression par la soufflante SF, par filtration dans une unité de filtrage F pour enlever les poussières si présentes, par compression par le compresseur V, par séchage par le sécheur S, par séparation par adsorption dans une unité ¨PSA
- et/ou une partie du gaz TG
- et/ou une partie du gaz CTG et/ou
- au moins une partie du gaz IN.

Ce deuxième mode d'opération peut être employé en cas d'arrêt de l'unité CB et/ou de l'unité PSA et/ou de l'unité UE, au moins un gaz est envoyé à l'air de manière transitoire le temps que l'unité s'arrête complètement. Dans certains cas l'azote N est envoyé à la tour T de manière temporaire le temps que l'unité s'arrête et réduise en pression. Dans certains cas, l'azote N n'est plus envoyé à la tour T alors que le gaz G et/ou TG et/ou CTG et/ou IN est envoyé à la tour T.

Cependant, selon le deuxième mode d'opération, il peut arriver que le compresseur V1 en aval du PSA s'arrête et pas le reste de l'appareil en amont du compresseur V1. Dans ce cas, on envoie de manière concomitante de l'azote N et le gaz G et/ou TG et/ou CTG et/ou IN contenant du CO2 dans la tour T (pendant plus longtemps que le cas ci-dessus).

Dans ce cas, un gaz G de l'unité émettrice UE faisant partie du gaz F ou constitué par le gaz F peut être envoyé en bas de la partie supérieure C de la tour T sans avoir été traité dans les unités L, LB, R, SF etc. Il aura dans ce cas probablement une température supérieure à 20°C, voire à 70°C et ou une concentration en azote inférieure à celle du gaz N.

En addition ou en alternative, du gaz G traité par au moins un des moyens suivants : par lavage à l'eau L, par lavage basique LB, par réchauffage R, par compression par la soufflante SF, par filtration dans une unité de filtrage F pour enlever les poussières si présentes, par compression par le compresseur V, par séchage par le sécheur S, par séparation par adsorption dans une unité "PSA produisant un gaz TG (en anglais « tail gas »), par compression V1 en aval de l'unité PSA produisant un gaz CTG (en anglais « compressed tail gas ») ou par séparation par condensation partielle et/ou distillation et/ou lavage et/ou solidification dans l'unité CB formant un gaz appauvri en CO2 IN peut être envoyé en bas de la partie supérieure C de la tour T. Ainsi du G peut être pris, comme illustré, en aval du lavage à l'eau L et en amont du lavage basique LB et/ou en aval du lavage basique LB et en amont d'un réchauffeur R et/ou en aval d'un réchauffeur R et en amont d'une soufflante SF et/ou en aval d'une unité de filtration F et en amont d'un compresseur V et/ou en aval d'un compresseur V et en amont d'un sécheur D et/ou en aval du sécheur et en amont d'une séparation par perméation ou adsorption. Il sera compris qu'au moins un des éléments listés peut être absent. Ainsi si le lavage basique n'est pas utilisé, le gaz est pris entre le lavage à l'eau L et le réchauffeur R. Il sera compris que le gaz G peut être composé d'un mélange d'au moins deux gaz pris directement en aval d'unités de traitement différent. Par exemple un gaz peut être pris juste en aval de l'unité de filtrage G et un autre juste en aval du sécheur, les deux peuvent être mélangés et envoyés à la tour au-dessus de la partie inférieure.

Le gaz peut également être composé de gaz provenant d'unités de capture de CO2 différentes, de sorte que la tour T sert de tour de mise à l'air commune pour plusieurs unités de capture.

Il est possible de prévoir des modes d'opération différents pour envoyer différents gaz G à la tour à des périodes différentes. Par exemple, selon le deuxième mode d'opération, un premier gaz destiné être mis à l'air est envoyé à la tour. Ce gaz peut par exemple est une partie du gaz F. Selon un troisième mode d'opération, un deuxième gaz destiné à être mis à l'air est envoyé à la tour, le premier gaz et le deuxième gaz ayant des compositions en au moins un composant commun qui diffèrent d'au moins 5%mol et/ou des températures qui diffèrent d'au moins 40°C. Le premier et le deuxième gaz sont chacun soit une partie du gaz résiduaire F soit un gaz provenant de l'unité de capture de CO2.

Par exemple pendant un premier temps, une partie du gaz F peut être envoyée à la tour, par exemple comme seul constituant du gaz G et pendant un deuxième temps, le gaz F n'est plus envoyé à la tour mais un gaz pris directement en aval d'une unité de traitement faisant partie de l'unité de capture peut être envoyé à la tour. Ce gaz peut par exemple être un gaz sans poussières à une température inférieure à 70°C qui provient d'une des sources suivantes : soupapes de sécurité de l'unité de capture, évents d'une machine de l'unité de capture, fluide de purge de l'unité de capture, ou un produit de l'unité de capture ne possédant pas les teneurs recherchées

L'unité de séparation CB peut comprendre une unité de séparation par adsorption avec bascule de température pour sécher le gaz CTG en amont de la séparation par condensation partielle et/ou distillation et/ou lavage et/ou solidification. En fonctionnement normal, selon le premier mode d'opération, il est également possible d'envoyer la purge (faible débit) du gaz de régénération de cette unité de séparation par adsorption avec bascule de température TSA à la tour T éventuellement en le mélangeant préalablement à l'azote N.

En démarrage, selon le deuxième mode d'opération, on peut envoyer de l'azote N à la tour T et des gaz à la tour T de manière concomitante (une partie du débit N2 à la partie inférieure I de la tour T et une partie d'un gaz contenant du CO2 à la partie supérieure C de la tour T)

## Revendications

1. Procédé de mise à l'air d'un gaz dans lequel :
i.Pendant un première mode d'opération, un débit gazeux (N) contenant au moins 50% mol d'azote, préférentiellement au moins 70% mol d'azote est envoyé à une tour (T) de mise en contact comprenant une section inférieure (I), et une section supérieure (C) et dans la section inférieure des moyens de favorisation de transfert de masse et de chaleur (P) à un premier niveau en bas de la section inférieure, la tour étant alimentée par un débit d'eau (H) arrivant à un deuxième niveau de la section inférieure au-dessus du premier niveau, le débit gazeux étant plus froid ou à la même température que le débit d'eau arrivant dans la tour, de l'eau refroidie (HR) est soutirée en cuve de la tour et le débit gazeux enrichi en eau sort en haut de la tour à l'atmosphère, aucun gaz n'étant envoyé à la tour à un niveau au-dessus du premier niveau et **caractérisé en ce que**
ii.Pendant un deuxième mode d'opération,
a) un débit gazeux (N) contenant au moins 50% mol d'azote est envoyé à la tour de mise en contact au premier niveau, la tour étant alimentée par un débit d'eau (H) arrivant au deuxième niveau au-dessus du premier niveau, le débit gazeux étant plus froid ou à la même température que le débit d'eau arrivant dans la tour, de l'eau refroidie (HR) est soutirée en cuve de la tour, un gaz (G, F, TG, CTG, IN) destiné à être mis à l'air est envoyé dans la tour à un troisième niveau au-dessus du deuxième niveau, le débit gazeux enrichi en eau mélangé au gaz, destiné à être mis à l'air vers le haut et en dehors de la tour, sort en haut de la tour
et/ou
b) après l'étape a) ou à la place de l'étape a),aucun débit gazeux contenant au moins 50% mol d'azote n'est envoyé à la tour de mise en contact, la tour n'est pas alimentée par un débit d'eau arrivant au deuxième niveau au-dessus du premier niveau et un gaz (G, F, TG, CTG, IN) destiné à être mis à l'air est envoyé dans la tour à un troisième niveau au-dessus du deuxième niveau, le débit gazeux enrichi en eau mélangé au gaz, destiné à être mis à l'air vers le haut et en dehors de la tour, sort en haut de la tour.

2. Procédé selon la revendication 1 dans lequel le gaz (G, F, TG, CTG, IN) destiné à être mis à l'air contient au moins 15% mol de CO2.

3. Procédé selon la revendication 1 ou 2 dans lequel le gaz destiné à être mise à l'air (G) est au moins une partie d'un gaz résiduaire (F) d'une source (UE) pouvant être au moins une unité de combustion et/ou au moins une unité de oxycombustion et/ou au moins une cimenterie et/ou au moins une unité de production de chaux et/ou au moins une unité de production de métal et/ou au moins une unité de vaporeformage et/ou au moins une unité de reformage autothermique.

4. Procédé selon la revendication 3 dans lequel le gaz résiduaire (F) est envoyé au moins pendant le premier mode d'opération à au moins une unité de capture de dioxyde de carbone (PSA, CC) pour s'y séparer.

5. Procédé selon l'une des revendications précédentes dans lequel le gaz résiduaire (F) contient de l'azote et le débit gazeux (N) envoyé à la tour (T) provient d'au moins une ou de l'au moins une unité de capture de dioxyde de carbone (PSA, CB, CC), de préférence d'au moins une unité d'adsorption ou de perméation de CO2 produisant un gaz enrichi en CO2 qui est ensuite séparé dans l'unité de capture et un gaz appauvri en CO2 qui constitue le débit gazeux envoyé à la tour.

6. Procédé selon la revendication 1 dans lequel du gaz résiduaire (F) contenant du CO2 et de l'azote provenant d'une source (UE) pouvant être au moins une unité de combustion et/ou au moins une unité de oxycombustion et/ou au moins une cimenterie et/ou au moins une unité de production de chaux et/ou au moins une unité de production de métal et/ou au moins une unité de vaporeformage et/ou au moins une unité de reformage autothermique est envoyé au moins pendant les premier et deuxième modes d'opération à une unité de capture de dioxyde de carbone (PSA, CB) ou procédé selon la revendication 2 ou 5 dans lequel du gaz résiduaire (F) contenant du CO2 et de l'azote provenant d'une source (UE) pouvant être au moins une unité de combustion et/ou au moins une unité de oxycombustion et/ou au moins une cimenterie et/ou au moins une unité de production de chaux et/ou au moins une unité de production de métal et/ou au moins une unité de vaporeformage et/ou au moins une unité de reformage autothermique est envoyé au moins pendant les premier et deuxième modes d'opération à l'au moins une unité de capture de dioxyde de carbone et le gaz (TG, CTG, IN) destiné à être mise à l'air provient de l'au moins une unité de capture (PSA, CB).

7. Procédé selon la revendication 6 dans lequel le gaz destiné à être mise à l'air (G, TG, CTG, IN) est produit par le lavage (L, LB) du gaz résiduaire contenant du CO2 et de l'azote et/ou par la compression (V) du gaz résiduaire contenant du CO2 et de l'azote et/ou de la séparation par adsorption ou perméation du gaz résiduaire contenant du CO2 et de l'azote et/ou du séchage (S) du gaz résiduaire contenant du CO2 et de l'azote et/ou de la séparation par condensation partielle et/ou distillation et/ou solidification (CB) du gaz résiduaire contenant du CO2 et de l'azote ou d'un gaz produit par le séparation du gaz résiduaire contenant du CO2 et de l'azote.

8. Procédé selon l'une des revendications précédentes dans lequel le deuxième mode d'opération correspond à une perturbation et/ou un arrêt intempestif et/ou un démarrage d'une unité (UE, PSA, L, LB, R, SF, V, S, PSA, CB, V1) dont provient le gaz (G, F, TG, CTG, IN) destiné à être mis à l'air.

9. Procédé selon l'une des revendications précédentes 3 à 7 dans lequel dans un troisième mode d'opération suivant directement le deuxième mode d'opération, le gaz (G, F, TG, CTG, IN) destiné à être mis à l'air n'est plus envoyé à la tour (T) mais est envoyé à une cheminée d'évacuation, à laquelle est envoyé au moins un autre gaz provenant de la source (UE).

10. Procédé selon l'une des revendications précédentes 3 à 7 dans lequel le premier mode d'opération correspond à un mode d'opération normale de l'unité de capture (PSA, CB, CC).

11. Procédé selon l'une des revendications précédentes dans lequel le deuxième mode d'opération dure moins qu'une heure, voire moins que dix minutes.

12. Procédé selon l'une des revendications précédentes dans lequel selon le deuxième mode d'opération, le gaz à mettre à l'air (G, TG, CTG, IN) est envoyé à la tour (T) pendant une durée déterminée et de préférence à la fin de la durée déterminée, le gaz à mettre à l'air est envoyé ailleurs.

13. Procédé selon la revendication 12 dans lequel selon le deuxième mode d'opération, un premier gaz (G, TG, CTG,IN) destiné être mis à l'air est envoyé à la tour et selon une troisième mode d'opération un deuxième gaz (G, TG, CTG,IN) destiné à être mis à l'air est envoyé à la tour, le premier gaz et le deuxième gaz ayant des compositions en au moins un composant commun qui diffèrent d'au moins 5%mol et/ou des températures qui diffèrent d'au moins 40°C, le premier et le deuxième gaz étant chacun soit une partie du gaz résiduaire (F) soit un gaz provenant de l'unité de capture de CO2 et le premier et le deuxième n'étant pas envoyés tous deux à la tour pendant les deuxième et troisième modes d'opération.

14. Appareil de séparation de CO2 et de mise à l'air d'un gaz comprenant une tour (T) de mise en contact comprenant une section inférieure (I), et une section supérieure (C) et dans la section inférieure des moyens de favorisation de transfert de masse et de chaleur, une unité de capture de CO2 (PSA, CB, CC), des moyens pour envoyer un gaz contenant éventuellement au moins 15% de CO2 à l'unité de capture de CO2, des moyens pour envoyer un gaz enrichi en azote (N) de l'unité de capture de CO2 en bas de la section inférieure de la tour de refroidissement, des moyens pour envoyer de l'eau (H) au-dessus de la section inférieure et en dessous de la section supérieure de la tour à une température plus chaude que ou égale à celle du gaz enrichi en azote entrant dans la tour et des moyens reliés à un_niveau au-dessus de la section inférieure pour y envoyer un gaz à mettre à l'air (G TG, CTG,IN) qui est une partie du gaz à séparer dans l'unité de capture de CO2 (PSA, CB CC) et/ou un gaz traité dans l'unité de capture de CO2 (PSA, CB CC).

15. Appareil selon la revendication 14 dans lequel la section inférieure (I) a un diamètre plus grand que celui de la section supérieure (C).
